Europäisches Patentamt

European Patent Office

Office européen des brevets

Veröffentlichungsnummer: **0 319 820**

**A1**

## EUROPÄISCHE PATENTANMELDUNG

Anmeldenummer: 88119829.5

Anmeldetag: 28.11.88

Int. Cl.4: **H04L 11/14 , H04L 11/16 , G06F 1/04**

Priorität: 11.12.87 DE 3742119

Veröffentlichungstag der Anmeldung:
14.06.89 Patentblatt 89/24

Benannte Vertragsstaaten:
AT CH DE ES FR GB IT LI NL SE

Anmelder: **Siemens Aktiengesellschaft Berlin und München**
**Wittelsbacherplatz 2**
**D-8000 München 2(DE)**

Erfinder: **Thamm, Peter, Dr.**
**Posseltstrasse 17a**
**D-7500 Karlsruhe 41(DE)**
Erfinder: **Muhr, Andreas**
**Starenweg 1**
**D-7515 Linkenheim(DE)**

Datenverarbeitungssystem.

Da Baugruppen in innenexplosionsgefährdeten Bereichen über eine Busleitung mit Energie versorgt werden können, braucht die Stromaufnahme der Gesamtheit der Baugruppen einen vorgegebenen Wert nicht übersteigen. Hierzu arbeiten die Baugruppen (BG1, BG2 ...) mit unterschiedlicher Taktfrequenz, und zwar arbeitet jeweils die Baugruppe, die als einzelne an einer Datenübertragung zu oder von einer Zentralen (ZE) beteiligt ist, mit hoher Taktfrequenz. Sind alle Baugruppen an der Datenübertragung beteiligt, z. B. Adressenaufruf, ist die Taktfrequenz niedrig.

Desgleichen ist die Taktfrequenz der nicht an einer Datenübertragung beteiligten Baugruppen niedrig.
Die Erfindung wird angewandt in Automatisierungssystemen.

FIG 3

## Datenverarbeitungssystem

Die Erfindung betrifft ein Datenverarbeitungssystem gemäß dem Oberbegriff des Anspruchs 1.

Baugruppen, die in explosionsgeschützten Bereichen eingesetzt werden, müssen die Bedingungen der Eigensicherheit erfüllen, d. h. ihr Energieinhalt muß beschränkt sein und die auf den Leitungen übertragene Leistung darf einen vorgegebenen Maximalwert nicht überschreiten. Solche Baugruppen sind z. B. Meßumformer, die in chemischen Verfahrensanlagen, Raffinerien und dergleichen räumlich weit verteilt angeordnet sind. Um den Aufwand für Leitungen klein zu halten, werden Datenverarbeitungssysteme als sogenannte Bussysteme ausgebildet, d. h., die Baugruppen sind parallel an eine Busleitung angeschlossen. Auch der Versorgungsstrom wird über die Busleitung geführt. Dabei kann der Versorgungsstrom über eine Signalleitung geführt werden; in den Baugruppen müssen dann die Signale von dem Versorgungsstrom getrennt werden. Wird ein solches Bussystem in einem explosionsgefährdeten Bereich eingesetzt, dann muß auch auf der Busleitung die Bedingung der Eigensicherheit erfüllt sein, d. h., der Versorgungsstrom für die Gesamtheit der Baugruppen darf den vorgegebenen Maximalwert nicht überschreiten. Eine Absenkung des Energieverbrauchs kann zwar durch Verwendung von leistungssparenden Bauelementen, vor allem in CMOS-Technik, erreicht werden. Eine weitere Absenkung ist durch Erniedrigen der Taktrate möglich. Dies hat aber den Nachteil, daß die Baugruppen mit entsprechend verringerter Geschwindigkeit arbeiten, was vor allem bei der Übertragung von Informationen erhebliche Nachteile hat, insbesondere dann, wenn zwecks eines geringen Leitungsaufwandes die Übertragung seriell erfolgt.

Der vorliegenden Erfindung liegt die Aufgabe zugrunde, ein Datenverarbeitungssystem zu schaffen, dessen Baugruppen in explosionsgefährdeten Bereichen angeordnet und über eine Leitung parallel mit Energie versorgt werden können.

Erfindungsgemäß wird diese Aufgabe mit den im kennzeichnenden Teil des Anspruchs 1 angegebenen Maßnahmen gelöst.

Im erfindungsgemäßen Datenverarbeitungssystem ist die Energieaufnahme der Gesamtheit der über eine gemeinsame Leitung versorgten Baugruppen stets kleiner als ein vorgegebener Maximalwert, im allgemeinen kleiner als der Wert, der für explosionsgefährdete Bereiche vorgeschrieben ist. Hierzu arbeiten die einzelnen Baugruppen mit unterschiedlicher Taktfrequenz, wobei dafür gesorgt ist, daß gleichzeitig nur einzelne Baugruppen mit der höchsten Taktfrequenz arbeiten. Da vor allem bei serieller Datenübertragung die Übertragungskapazität der Busleitung einen Engpaß für die Datenverarbeitung bildet, arbeiten vorzugsweise die an einer Datenübertragung beteiligten Baugruppen mit der hohen Taktfrequenz, sofern nur einzelne Baugruppen an der Datenübertragung beteiligt sind. Die anderen Baugruppen werden nicht abgeschaltet, sondern ihre Taktfrequenz wird nur erniedrigt, so daß sie funktionsfähig bleiben und z. B. intern Daten verarbeiten, Meßwerte aufnehmen oder auf Überschreiten von Grenzwerten reagieren können. Außerdem können sie, allerdings nur mit der verminderten Taktrate, über die Busleitung angesprochen werden.

Anhand der Zeichnungen werden im folgenden die Erfindung sowie Weiterbildungen und Vorteile näher beschrieben und erläutert.

Es veranschaulichen

Figur 1 ein Datenverarbeitungssystem mit über eine Zweidrahtleitung verbundenen Baugruppen,

die Figuren 2 und 3 Ausführungsbeispiele von Baugruppen.

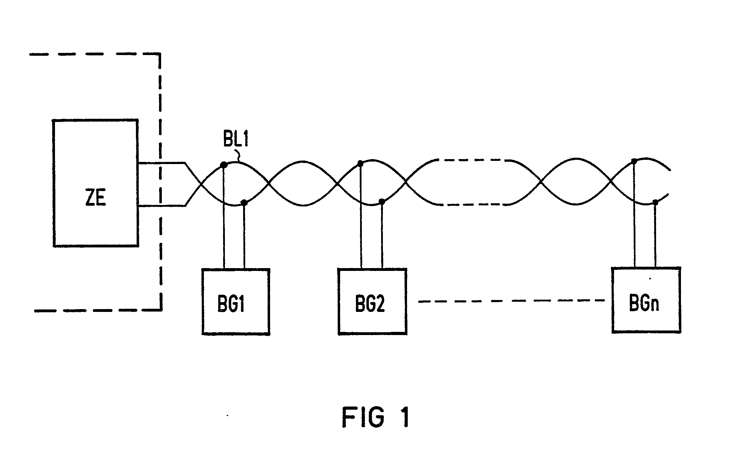

In Figur 1 ist mit ZE eine Zentrale bezeichnet, an welche mehrere Baugruppen BG1, BG2 ... BGn über eine Busleitung BL angeschlossen sind. Die Busleitung kann eine Zweidrahtleitung sein, über die nicht nur Daten und Adressen übertragen werden, sondern auch die Baugruppen mit Energie versorgt werden. Die Baugruppen und die Busleitung sind in einem explosionsgefährdeten Bereich angeordnet, so daß Strom und Spannung auf der Leitung begrenzt sein müssen. Damit einerseits diese Leistungsbegrenzung eingehalten wird, arbeiten nur einzelne Baugruppen mit einer hohen Taktrate, die anderen mit einer niedrigen. Im folgenden wird vorausgesetzt, daß in erster Linie die Übertragungskapazität der Busleitung ausgenutzt werden soll. Demgemäß arbeiten nur die Baugruppen mit einer hohen Taktfrequenz, die an einer Datenübertragung beteiligt sind. Im Falle einer Übertragung, an der mehrere Baugruppen beteiligt sind, z. B. wenn zum Aufruf einer Baugruppe deren Adresse übertragen wird, die von allen Baugruppen empfangen und mit ihren eigenen Adressen verglichen wird, arbeiten alle Baugruppen mit der niedrigen Frequenz, damit auch in diesem Falle die maximal zulässig übertragene Leistung nicht überschritten wird. Anstelle einer Busleitung kann für die Datenübertragung auch eine Ringleitung eingesetzt werden. Ferner können die Baugruppen so ausgebildet sein, daß jede von ihnen die Funktion der Zentralen übernehmen kann. Zur Übertragung der Taktsignale kann eine gesonderte Taktleitung vorgesehen sein. Diese kann, wie es bei einer Zweidrahtleitung der Fall ist, eingespart werden, indem das Taktsignal aus den Binärsignalen gewonnen wird.

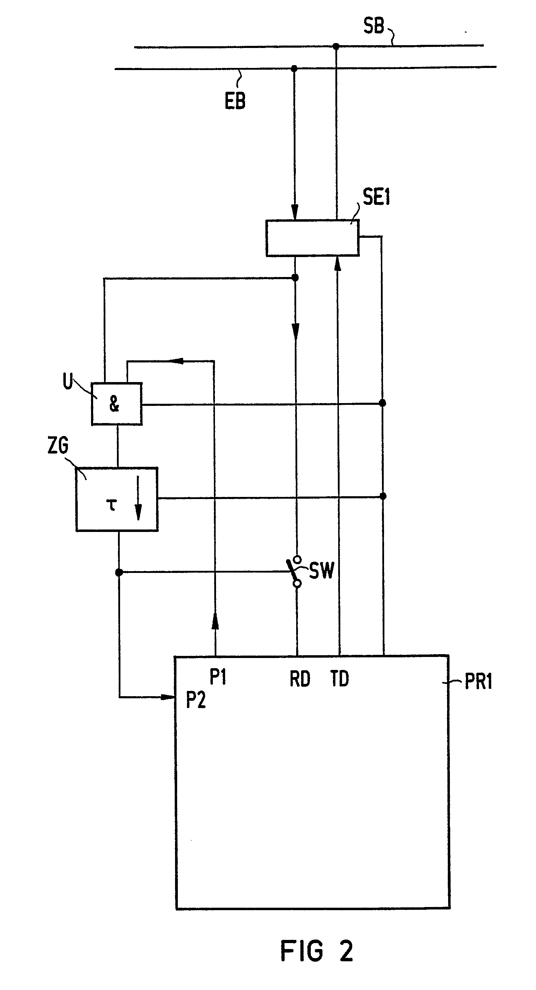

Für die Baugruppe nach Figur 2 ist vorausgesetzt, daß zur Informationsübertragung Daten seriell von den Teilnehmern zur Zentralen über eine Sendebusleitung SB und in entgegengesetzter Richtung ebenfalls seriell über eine Empfangsbusleitung EB übertragen werden. Über eine der beiden Busleitungen fließt ferner der Versorgungsstrom der Baugruppen. Diese sind an die Busleitungen EB, SB über je eine Sende- und Empfangseinheit SE1 angeschlossen, welche die übertragenen Binärsignale vom Versorgungsstrom abkoppelt und den einzelnen Baueinheiten der Baugruppe zuführt. Diese enthalten je einen Prozessor PR1 mit einem Ausgang TD, von dem über die Sende- und Empfangseinheit SE1 Daten auf die Sendebusleitung SB gegeben werden, und mit einem Eingang RD, der über einen Schalter SW und die Sende- und Empfangseinheit SE1 an die Empfangsbusleitung angeschlossen ist. Der Schalter SW wird von einem Zeitglied ZG gesteuert, dessen Ausgangssignal ferner einem Eingang P2 des Prozessors PR1 zugeführt ist. Ihm werden über eine vom Prozessor gesteuerte Torschaltung U, im Ausführungsbeispiel ein UND-Glied, die Eingangssignale von der Empfangsbusleitung zugeführt.

Die Baugruppen, die an einer Datenübertragung nicht teilnehmen, arbeiten mit einer niedrigeren Taktfrequenz als die, die von der Zentraleinheit Daten empfangen oder an diese senden. Auf der Empfangsbusleitung sind daher während der Informationsübertragung Signale, die zwar von allen Teilnehmern empfangen werden, die aber für die mit niedriger Frequenz arbeitenden unsinnig sind. Damit diese Signale nicht zu einer falschen Reaktion führen, ist der Schalter SW der nicht an der Datenübertragung beteiligten Baugruppen geöffnet, und über den Ausgang P1 des Prozessors PR1 ist der Torschaltung U ein Freigabesignal zugeführt. Das Zeitglied ZG wird daher mit jedem Impuls auf der Empfangsbusleitung EB gestartet. Seine Zeitkonstante ist daher mindestens so lange, wie der maximale Impulsabstand bei der schnellen Datenübertragung auf der Empfangsbusleitung ist. Das Zeitglied wird dadurch in einen Schaltzustand gesteuert, in dem der Schalter SW geöffnet ist. Soll eine Baugruppe an einer Datenübertragung beteiligt werden, so wird die Frequenz auf der Empfangsbusleitung EB so weit erniedrigt, daß der Impulsabstand kleiner als die Zeitkonstante des Zeitgliedes ist. Der Schalter SW wird geschlossen und dem Prozessor PR1 über den Eingang P2 eine entsprechende Meldung gegeben, der darauf über den Eingang P1 die Torschaltung U sperrt. Die Baugruppe ist damit zum Empfang von Signalen bereit. Dieser Vorgang läuft in allen Baugruppen gleichzeitig ab. Die Auswahl der Baugruppe, zu oder von der eine Datenübertragung stattfinden soll, wird wie üblich durch Ausgabe einer Adresse angesprochen. Da alle Baugruppen gleichzeitig diese Adresse empfangen und mit ihrer Adresse vergleichen, sind alle Baugruppen gleichzeitig an einer Signalübertragung beteiligt, die daher nur mit niedriger Frequenz erfolgen kann, damit der zulässige maximale Strom auf der Busleitung nicht überschritten wird. Der Prozessor der angesprochenen Baugruppe gibt nach Erkennen seiner Adresse ein Sperrsignal auf die Torschaltung U, so daß der Teilnehmer bis zur Beendigung der Übertragung an die Busleitungen angeschlossen bleibt. Die anderen Baugruppen schalten sich ab, indem ihre Prozessoren Freigabesignale auf ihre zugehörige Torschaltung geben. Die Impulse auf der Empfangsbusleitung starten das Zeitglied, das seinerseits den Schalter SW öffnet und damit den Prozessor von der Empfangsbusleitung trennt. Die angesprochene Baugruppe quittiert den Empfang ihrer Adresse mit erhöhter Taktfrequenz, mit der dann die gesamte weitere Übertragung durchgeführt wird.

Damit die Baugruppen den Beginn eines Aufrufs, d. h. den Übergang von der schnellen auf die langsame Übertragungstaktrate, sicher erkennen, ist zweckmäßig eine Impulslücke eingefügt, die länger als die in den Zeitgliedern eingestellte Zeit ist und welche die Zeitglieder daher sicher erkennen. Auf die Impulslücke kann verzichtet werden, wenn sichergestellt ist, daß die Impulsabstände bei der Übertragung mit hoher Taktrate stets kleiner und die Abstände bei der niedrigeren Taktrate größer als die im Zeitglied angestellte Zeit sind. Diese Bedingung läßt sich durch Wahl eines geeigneten Übertragungscodes erfüllen. Die im Ausführungsbeispiel verwendeten Bauelemente Torschaltung U, Zeitglied ZG, Schalter SW können durch Programmieren des Prozessors PR1 ersetzt werden.

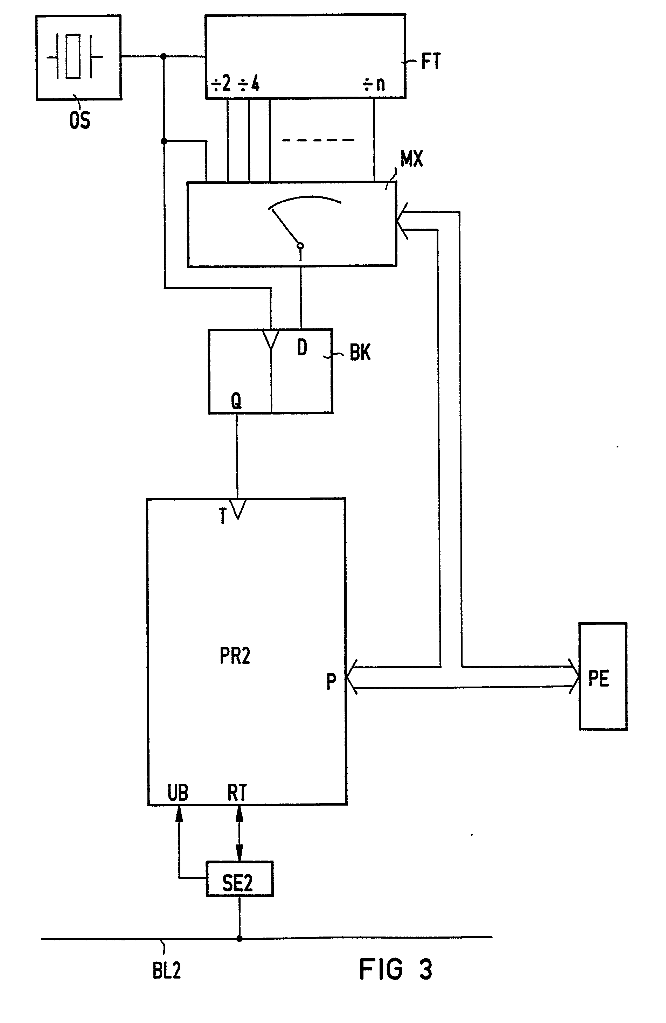

Das Blockschaltbild nach Figur 3 veranschaulicht eine Baugruppe mit einem Prozessor PR2, der einen Ein-/Ausgang RT aufweist, der über eine Sende-/Empfangseinheit SE2 an eine Busleitung BL2 angeschlossen ist, über welche binäre Signale und der Versorgungsstrom für die Baugruppen geführt sind. Die Sende-/Empfangseinheit SE2 trennt die empfangenen Impulse vom Versorgungsstrom und schaltet sie auf den Ein-/Ausgang RT; der Versorgungsstrom wird einem Eingang UB2 zugeführt. Im Prozessor PR2 erzeugte Nachrichten, die für eine Zentraleinheit oder andere Teilnehmer bestimmt sind, werden vom Ein-/Ausgang RT über die Sende-/Empfangseinheit SE2 seriell auf die Busleitung geschaltet. An den Prozessor PR2 sind periphere Einheiten, z. B. Meßumformer, angeschlossen.

Wie schon mehrfach erwähnt, werden die Baugruppen mit unterschiedlicher Taktfrequenz betrieben, derart, daß die über die Busleitung fließende Leistung einen Maximalwert nicht überschreitet. Es arbeiten daher nur einzelne Teilnehmer mit einer hohen Frequenz, die übrigen mit einer niedrigen. Während im Ausführungsbeispiel nach Figur 1 das Anschalten der Teilnehmer an die Busleitungen von der Zentraleinheit mittels einer von den Baugruppen erkannten Impulslücke erfolgt, schalten im Ausführungsbeispiel nach Figur 3 die Baugruppen selbständig ihre Taktfrequenz um. Hierzu ist das Ausgangssignal eines Oszillators OS einem Frequenzteiler FT zugeführt, an dessen Ausgänge ein Multiplexer MX angeschlossen ist. Ein Eingang des Multiplexers ist unmittelbar mit dem Oszillator verbunden. Der Multiplexer MX ist vom Prozessor PR2 gesteuert, an den er wie die andere periphere Einheiten PE angeschlossen ist. Das Ausgangssignal des Multiplexers ist dem Vorbereitungseingang einer bistabilen Kippstufe BK zugeführt, die von den Flanken der Impulse des Oszillators OS getriggert ist. Es entstehen daher beim Umschalten der Frequenz keine Umschaltspitzen. An den Ausgang der bistabilen Kippstufe BK ist der Takteingang des Prozessors PR2 angeschlossen. Um Leistung zu sparen, ist im Normalfall der Multiplexer MX so geschaltet, daß die niedrigste Frequenz des Frequenzteilers FT auf den Takteingang T gelangt und der Prozessor damit mit einer langsamen Taktrate betrieben wird. Aufgrund einer äußeren Anforderung, z. B. wenn ein von den peripheren Einheiten PE erfaßter Meßwert einen Grenzwert überschreitet, oder eines über die Busleitung BL2 gesandten bestimmten Zeichens, etwa die Adresse der Baugruppe, erhöht der Prozessor PR2 selbständig seine Taktrate, indem er den Multiplexer MX auf eine höhere Ausgangsfrequenz des Frequenzteilers FT umschaltet, um damit auf die äußere Anforderung mit vergrößerter Geschwindigkeit zu reagieren. Ist diese Anforderung abgearbeitet, schaltet der Prozessor seinen Takt wieder auf eine niedrige Frequenz um.

Während im Ausführungsbeispiel nach Figur 2 die Taktrate nur zum Übertragen von Informationen erhöht wird, kann die Baugruppe nach Figur 3 die Taktfrequenz auch zum Bearbeiten interner Vorgänge erhöht werden. Dazu muß allerdings sichergestellt werden, daß die Stromaufnahme durch die Gesamtheit der Baugruppen einen vorgegebenen Maximalwert nicht überschreitet. Im Ausführungsbeispiel ist ein Frequenzteiler eingesetzt, der eine Vielzahl von aus der Frequenz des Oszillators OS abgeleiteten Frequenzen abgibt. Im allgemeinen genügt es, wenn für den Prozessortakt zwei Frequenzen zur Verfügung stehen, also die Frequenz des Oszillators OS und eine davon abgeleitete Frequenz. Der Oszillator braucht nicht Bestandteil der Baugruppe zu sein; die Taktimpulse können auch aus den Signalen auf der Busleitung BL gewonnen werden, vor allem, wenn ein Übertragungscode verwendet wird, bei dem je Taktperiode mindestens eine Impulsflanke auftritt. Vorteilhaft werden Oszillatoren, die in den Baugruppen enthalten sind, von den Impulsen auf der Busleitung BL synchronisiert.

## Ansprüche

1. Datenverarbeitungssystem mit mehreren Baugruppen, die über eine gemeinsame Leitung mit Energie versorgt werden, **dadurch gekennzeichnet,** daß jede Baugruppe auf unterschiedliche Taktfrequenzen einstellbar ist, daß einzelne Baugruppen mit einer hohen Taktfrequenz und die anderen mit niedriger Taktfrequenz arbeiten, derart, daß stets die von der Gesamtheit der Baugruppen aufgenommene Leistung kleiner als ein vorgegebener Maximalwert ist.

2. Datenverarbeitungsanlage nach Anspruch 1, **dadurch gekennzeichnet,** daß bei Beteiligung einer kleinen Anzahl von Baugruppen an einer Datenübertragung diese Baugruppen mit einer hohen Taktfrequenz arbeiten, daß bei Beteiligung einer großen Anzahl von Teilnehmern an einer Datenübertragung deren Taktfrequenz niedrig ist und daß die nicht an der Datenübertragung beteiligten Teilnehmer mit nie ger Taktfrequenz arbeiten.

3. Datenverarbeitungsanlage nach Anspruch 2, **dadurch gekennzeichnet,** daß die Taktfrequenz von einer zentralen Einheit gesteuert ist und die Baugruppen jeweils eine Einrichtung enthalten, die den Übergang von der höheren auf die niedrige Taktfrequenz erkennt und die Baugruppe aktiviert.

4. Datenverarbeitungsanlage nach Anspruch 3, **dadurch gekennzeichnet,** daß die Baugruppen je eine Einrichtung enthalten, welche die Abstände der Impulse auf eine Mindestdauer überwacht und die zugehörige Baugruppe aktiviert, wenn die Mindestdauer überschritten ist.

5. Datenverarbeitungsanlage nach Anspruch 4, **dadurch gekennzeichnet,** daß zwischen die mit hoher Taktfrequenz übertragenen Signale und die mit niedriger Frequenz übertragenen eine Impulslücke eingefügt ist.

6. Datenverarbeitungsanlage nach Anspruch 4 oder 5, **dadurch gekennzeichnet,** daß die Baugruppen jeweils eine retriggerbare monostabile Kippstufe enthalten, die von den auf der Busleitung übertragenen Daten oder einem Taktsignal angesteuert ist und die im stabilen Schaltzustand die zugehörige Baugruppe aktiviert.

7. Datenverarbeitungsanlage nach Anspruch 6, **dadurch gekennzeichnet,** daß die monostabile Kippstufe der an einer Datenübertragung beteiligten Baugruppen im stabilen Zustand gehalten ist.

8. Datenverarbeitungsanlage nach Anspruch 1, **dadurch gekennzeichnet,** daß die Baugruppen je einen Prozessor (PR2) und einen von diesem gesteuerten Taktumschalter (FT, MX) enthalten.

9. Datenverarbeitungsanlage nach Anspruch 8, **dadurch gekennzeichnet,** daß die Baugruppen je einen vom Prozessor (PR2) programmierbaren Frequenzteiler (FT) enthalten, der an einen Oszillator (OS) angeschlossen ist und von dessen Ausgängen jeweils einer über einen vom Prozessor (PR2) gesteuerten Multiplexer (MX) auf den Takteingang des Prozessors (PR2) schaltbar ist.

87 P 4477

FIG 1

87 P. 4477

FIG 2

87 P 4477

FIG 3

| Europäisches Patentamt | EUROPÄISCHER RECHERCHENBERICHT | Nummer der Anmeldung |
|---|---|---|
| | | EP 88 11 9829 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 831 147 (LICENTIA)<br>* Figur *<br>--- | 1 | H 04 L 11/14<br>H 04 L 11/16<br>G 06 F 1/04 |
| A | DE-A-2 248 170 (GLIEM)<br>* Seite 4, Zeile 25 - Seite 5, Zeile 10 *<br>--- | 1-3,8 | |
| A | WO-A-8 502 275 (MOTOROLA)<br>* Zusammenfassung *<br>--- | 1,8,9 | |
| A | MINI-MICRO CONFERENCE RECORD, Mai 1984, Seiten 23/5, 1-10, Northeast, New York, US; R.L. MITCHELL: "Super serial systems"<br>* Seite 3 *<br>----- | 1,3,8 | |
| | | | RECHERCHIERTE SACHGEBIETE (Int. Cl.4)<br><br>H 04 L<br>G 06 F |

Der vorliegende Recherchenbericht wurde für alle Patentansprüche erstellt

| Recherchenort | Abschlußdatum der Recherche | Prüfer |
|---|---|---|
| DEN HAAG | 20-03-1989 | MIKKELSEN C. |